# EUROPÄISCHE PATENTSCHRIFT

(11) **EP 2 870 012 B1**
(45) Veröffentlichungstag und Bekanntmachung des Hinweises auf die Patenterteilung: **14.09.2016**
(21) Anmeldenummer: 13736767.8
(22) Anmeldetag: 02.07.2013
(51) Int. Cl.: B60K 1/00, H01F 7/16, F16H 61/28

(54) **ANTRIEBSVORRICHTUNG FÜR KRAFTFAHRZEUGE, INSBESONDERE ABKOPPELBARE ANTRIEBSSYSTEME**
DRIVING DEVICE FOR VEHICLE, WHICH CAN BE IN PARTICULAR DECOUPLED
DISPOSITIF DE PROPULSION POUR VEHICULE , QUI PEUT ÊTRE EN PARTICULIER DÉCOUPLÉ

(30) Priorität: 04.07.2012 DE 102012013375
(43) Veröffentlichungstag der Anmeldung: 13.05.2015
(73) Patentinhaber: Audi AG, 85045 Ingolstadt (DE)
(72) Erfinder: SCHOBESS, Nico, 85080 Gaimersheim (DE); BOCK, Dominik, 93489 Schorndorf (DE); PINSCHMIDT, Udo, 85080 Gaimersheim (DE)
(74) Vertreter: Wohnert, Dietmar
(86) Internationale Anmeldenummer: PCT/EP2013/001933
(87) Internationale Veröffentlichungsnummer: WO 2014/005698

(56) Entgegenhaltungen:
- CN-U- 201 980 080
- CN-U- 202 034 850
- CN-U- 202 068 273
- FR-A1- 2 928 583
- US-A- 4 928 028
- US-A1- 2011 107 864

## Beschreibung

Die vorliegende Erfindung betrifft eine Antriebsvorrichtung für Kraftfahrzeuge gemäß dem Oberbegriff des Patentanspruchs 1.

Wenn bei derartigen Antriebsvorrichtungen eine Elektromaschine auf ein Achsdifferenzial bzw. auf eine Antriebsachse des Kraftfahrzeugs abtreibt, so kann dies direkt ohne Zwischenschaltung eines Getriebes erfolgen, was aber eine relativ leistungsstarke, voluminöse Elektromaschine erfordert, oder aber es kann ein in Übersetzungsstufen umschaltbares Getriebe vorgesehen sein, über das in den unteren Geschwindigkeitsbereich des Kraftfahrzeugs ein hohes Abtriebdrehmoment übertragbar ist und im höheren Geschwindigkeitsbereichen eine Übersetzung ins Schnelle vorliegen kann. Die Elektromaschine kann dann vorteilhaft gewichts- und bauraumgünstiger ausgeführt sein.

Ein Achsantrieb mit einer festen oder gar keiner Untersetzung weist die im Folgenden stichpunktartig aufgelisteten Nachteile auf: Keine Spreizung im Hinterachsantrieb vorhanden; Betriebspunkt der E-Maschine ist durch die feste Untersetzung direkt von der Fahrgeschwindigkeit abhängig; Elektromotor wird häufig in ungünstigen Betriebspunkten (Wirkungsgrad) betrieben.

Eine Vorrichtung nach dem Oberbegriff des Anspruchs 1 ist aus FR 2 928 583 bekannt.

Aufgabe der Erfindung ist es, eine Antriebsvorrichtung der gattungsgemäßen Art vorzuschlagen, mittels der bei einem guten Getriebewirkungsgrad eine baulich einfache und zuverlässig funktionierende Umschaltung der Übersetzungsstufen gegeben ist.

Die Aufgabe ist mit den Merkmalen des Patentanspruchs 1 gelöst. Vorteilhafte und besonders zweckmäßige Ausgestaltungen und Weiterbildungen der Erfindung sind Gegenstand der Unteransprüche.

Erfindungsgemäß wird vorgeschlagen, dass dem Differenzial mindestens zwei über eine Schaltkupplung, etwa eine Synchronkupplung oder eine Klauenkupplung umschaltbare, durch Zahnradsätze gebildete Gänge und eine Entkopplung vorgeschaltet sind, wobei die Umschaltvorrichtung, zum Beispiel eine Schaltmuffe der Synchronkupplung, elektrisch in die Gangstellungen bzw. in eine Neutralstellung umschaltbar ist. Über die Zahnradsätze sind zwei im Wirkungsgrad günstige Übersetzungsstufen geschaffen, die zudem beispielsweise in an sich bei Schaltgetrieben üblicher Weise über eine Doppelsynchronkupplung schaltbar sind. Die vorgeschlagene elektrische Betätigung der Schaltmuffe der Synchronkupplung ermöglicht eine bauliche einfache und vorteilhaft in Antriebsachsen integrierbare Schaltvorrichtung.

Nachfolgend sind weitere Aspekte der Erfindung beschrieben, die zum Teil speziell auf Doppel-Synchronkupplungen bezogen sind. Die Erfindung ist jedoch keinesfalls auf Doppel-Synchronkupplungen beschränkt. Vielmehr können anstelle dessen auch beliebig andere Umschaltvorrichtungen verwendet werden.

Allgemein ausgedrückt sollen also in einem Achsantrieb, zum Beispiel einem Hinterachsantrieb, unterschiedliche Untersetzungen (Gänge) dargestellt werden. Mit Hilfe einer elektrischen Aktuatorik sollen verschiedene Gänge in einem elektrischen Hinterachsantrieb zum Beispiel durch eine Synchronisierung eingelegt bzw. ausgelegt und synchronisiert werden. Um diese Schaltungen auszuführen, muss eine Schiebemuffe einer Synchronisierung axial verschoben werden. Die Bewegungen der Schiebemuffe sollen mittels einer geeigneten Käfigkonstruktion und mit Hilfe von Elektromotoren oder Magnetstellern realisiert werden.

Ein Hinterachsantrieb mit speziell einer elektrisch aktuierten Schaltung weist folgende Vorteile auf: Darstellung einer Spreizung in einem Hinterachsantrieb; Erweiterung des Arbeitsbereichs der E-Maschine durch weitere Gänge; Betreiben der E-Maschine über den gesamten Arbeitsbereich in einem Wirkungsgrad optimalen Bereich; Entkopplung des Antriebs möglich (zum Beispiel im Fehlerfall oder als Funktion); Aufwand ist gering gehalten. Gemäß der Erfindung sind am Umfang eines Käfigs mehrere Magnetsteller angebracht. Die lineare Bewegung der Magnetsteller wird über den Käfig auf die Schiebemuffe der Synchronisierung übertragen und somit das Ein-/Auslegen und Synchronisieren der Gänge realisiert. Nachfolgend sind die optionalen Merkmale der Erfindung nochmals beschrieben:

Gemäß der Erfindung ist die axial verschiebliche Schaltmuffe direkt über zumindest eine elektromagnetische Stellvorrichtung mit zwei in entgegengesetzten Stellrichtungen wirkenden Elektromagneten bestätigt. Dabei kann bevorzugt der mit der Schaltmuffe zusammenwirkende Anker der Stellvorrichtung durch zumindest eine Feder in die Neutralstellung der Synchronkupplung vorgespannt sein. Damit erfolgt das Schalten der Gangstufen elektromagnetisch, während die Neutralstellung mittels Federkraft bewirkt ist.

Zum Schalten der Gangstufen, gemäß der Erfindung sind zumindest zwei, bevorzugt drei an der Schaltmuffe angreifende, elektromagnetische Stellvorrichtungen vorgesehen. Durch die Mehrfachanordnung können baulich relativ einfache und klein bauende Stellvorrichtungen verwendet werden, die zudem symmetrisch an einem Stellring auf der Schaltmuffe angreifen können.

Schließlich kann eine präzise definierte, einfache Neutralstellung der Schaltmuffe erreicht werden, indem der Anker der elektromagnetischen Stellvorrichtung mittels zweier gegensinnig wirkender Schraubendruckfedern in die neutrale Mittelstellung vorgespannt ist.

Mehrere Ausführungsbeispiele der Erfindung sind im Folgenden anhand der beigefügten Zeichnung 1-3 näher erläutert. Es zeigen:
- Fig. 1: in einem Längsschnitt eine über eine Elektromaschine angetriebene Antriebsachse für ein Kraftfahrzeug mit Hybridantrieb, mit einem dem Achsdifferenzial vorgeschalteten Getriebe mit zwei Gangstufen, die über eine elektrisch betätigte Doppelsynchronkupplung schaltbar sind;
- Fig. 2: die elektrische Betätigung der Schaltmuffe der Doppelsynchronkupplung mittels dreier elektromagnetischer Stellvorrichtungen, die auf einen Stellring der Schaltmuffe wirken;
- Fig. 3: eine der Stellvorrichtungen nach Fig. 2 in einem Längsschnitt;
- Fig. 4: eine alternative Betätigungsvorrichtung, die nicht zur Erfindung gehört, der Schaltmuffe der Doppelsynchronkupplung mit einem verdrehbaren Stellring, der über ein Zahnsegment und einen elektrischen Stellmotor verstellbar ist; und
- Fig. 5: eine weitere Betätigungsvorrichtung, die nicht zur Erfindung gehört, nach Fig. 4, bei der der Stellring mittels einer elektromagnetischen Stellvorrichtung nach Fig. 2 verdrehbar ist.

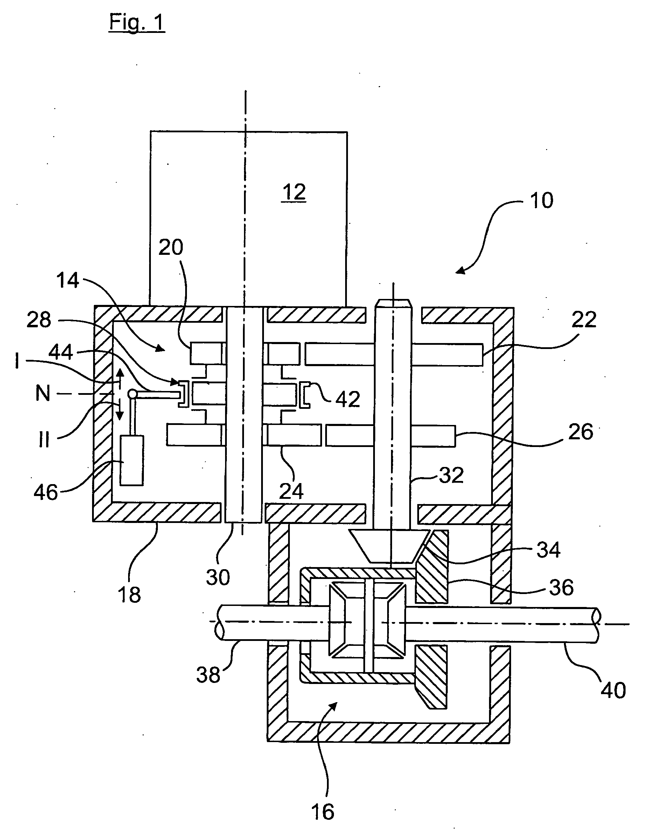

In der Fig. 1 ist teilweise und nur grob schematisch ein Achsantrieb 10 für ein Kraftfahrzeug mit Hybridantrieb dargestellt, mit einer Elektromaschine 12, die über ein Getriebe 14 mit zwei Übersetzungsstufen auf ein Achsdifferenzial 16 abtreibt. Das Getriebe 14 und das Achsdifferenzial 16 sind in einem gemeinsamen Gehäuse 18 angeordnet, an das die Elektromaschine 12 angeflanscht ist.

Das Getriebe 14 weist als Übersetzungsstufen zwei Zahnradsätze 20, 22 und 24, 26 auf, von denen die über eine Doppelsynchronkupplung 28 schaltbaren Loszahnräder 20, 24 auf einer mit der Elektromaschine 12 verbundenen Antriebswelle 30 gelagert sind, während die Festzahnräder 22, 26 auf einer Abtriebswelle 32 angeordnet sind.

Die Abtriebswelle 32 trägt ein Kegelritzel 34, das mit dem Tellerrad 36 des Kegelraddifferenzials bzw. Achsdifferenzials 16 in Eingriff ist. Das Achsdifferenzial 16 treibt in bekannter Weise über Antriebswellen 38, 40 auf zum Beispiel die Hinterräder des Kraftfahrzeugs ab.

Die Doppelsynchronkupplung 28 ist in bei Schaltgetrieben von Kraftfahrzeugen bekannter Bauart ausgeführt und weist eine innenverzahnte Schaltmuffe 42 auf, über die sie auf einem wellenfesten Kupplungskörper axial verschiebbar aus einer mittleren Neutralstellung N heraus in die beiden Gangstufen I und II schaltbar ist.

Die Schaltmuffe 42 gerät dabei in bekannter Weise mit an den Loszahnrädern 20, 24 angeordneten Schaltverzahnungen (nur angedeutet) in Eingriff und kuppelt diese alternierend mit der Antriebswelle 30, wodurch eine niedrigere oder eine höhere Übersetzung zwischen der Elektromaschine 12 und dem Achsdifferenzial 16 geschaltet ist. In Neutralstellung N der Schaltmuffe 42 ist die Elektromaschine 12 von dem Achsdifferenzial 16 trieblich entkoppelt.

Es sei bemerkt, dass die Loszahnräder und die Doppelsynchronkupplung auch auf der Abtriebswelle 32 angeordnet sein können.

Die Schaltmuffe 42 weist in bekannter Weise eine Umfangsnut (ohne Bezugszeichen) auf, in die zum Beispiel eine Schaltgabel 44 (nur angedeutet) einragt, die über ein elektromagnetisches Stellglied 46 von der Neutralstellung N aus in beiden Stellrichtungen zum Schalten der Gangstufen I oder II betätigbar ist.

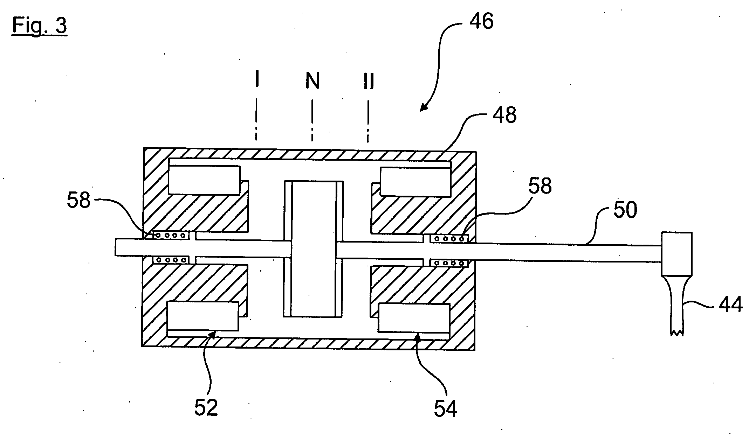

Die Fig. 3 zeigt das elektromagnetische Stellglied 46, dessen in einem Gehäuse 48 verschiebbar gelagerter Anker 50 die Schaltgabel 44 trägt. Um den Anker 50 sind zwei Elektromagneten 52, 54 angeordnet, die alternierend elektrisch angesteuert einen auf dem Anker 50 befestigten Magnetkern 56 zum Schalten der Gangstufen I oder II anziehen.

Ferner sind zwischen dem Anker 50 und dem Gehäuse 48 des Stellglieds 46 zwei Schraubendruckfedern 58 gegensinnig wirkend vorgespannt, die den Anker 50 bei nicht elektrisch angesteuerten Elektromagneten 52, 54 in der Mittelstellung N halten. Die Vorspannkraft der Federn 58 ist geringer als die über die Elektromagneten 52, 54 aufbringbare Stellkraft.

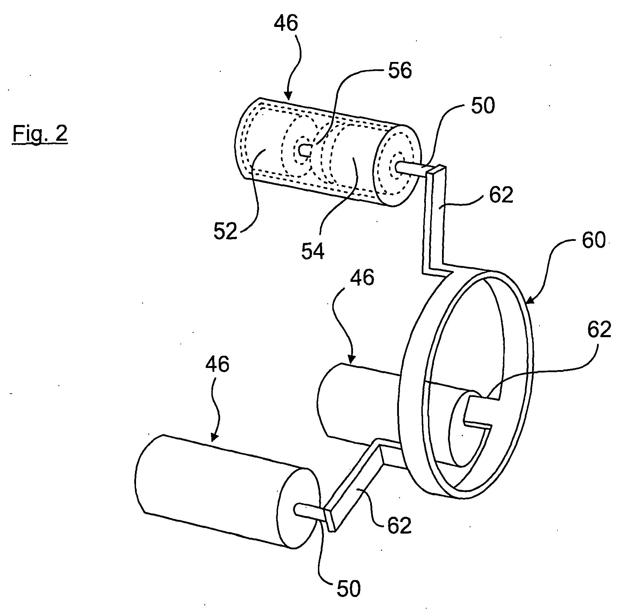

Die Fig. 2 zeigt ein weiteres Ausführungsbeispiel der Erfindung, bei dem auf der Schaltmuffe 42 in deren besagter Umfangsnut ein Stellring 60 gelagert ist, über den die Schaltmuffe 42 entsprechend axial verschiebbar ist. Aus Montagegründen kann der Stellring 60 geteilt ausgebildet sein.

An den Stellring 60 sind drei radial über den Umfang des Stellrings 60 symmetrisch verteilte und nach außen abragende Stellarme 62 angeformt, an denen die Anker 50 dreier elektromagnetischer Stellglieder 46 entsprechend Fig. 2 befestigt sind.

Durch entsprechende Ansteuerung der Stellglieder 46 kann über den Stellring 60 die Schaltmuffe 42 zum Schalten der Gangstufen I oder II axial verschoben werden.

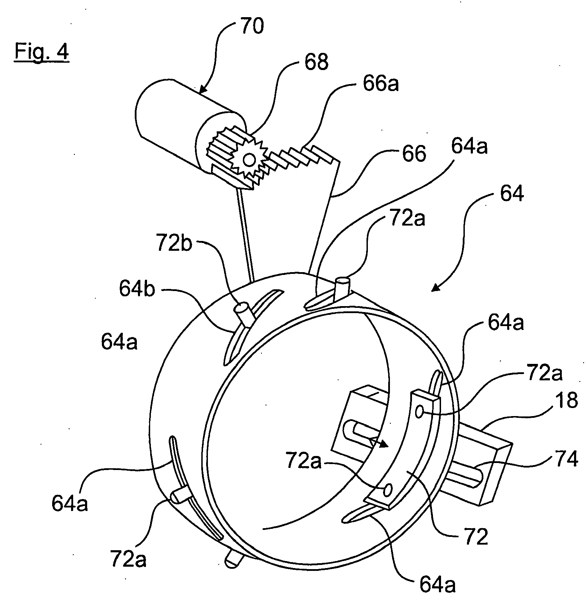

Die Fig. 4 zeigt ein weiteres Ausführungsbeispiel bei dem um die Schaltmuffe 42 ein verdrehbarer, aber axial unverschiebbarer Stellring 64 angeordnet ist. Von dem Stellring 64 ragt radial nach außen ein Stellhebel 66 mit einem Zahnsegment 66a ab, das mit einem Antriebsritzel 68 eines elektrischen Stellmotors 70 zusammenwirkt.

Innerhalb des Stellrings 64 sind drei umfangsverteilte Schieber 72 vorgesehen, die in die Umfangsnut der Schaltmuffe 42 einragen und die radial nach außen abragende Zapfen 72a und 72b aufweisen.

Ein jeder Schieber 72 weist zwei umfangsmäßig voneinander beabstandete Zapfen 72a auf, die in zur Umfangsrichtung schräge Kulissenführungen 64a des Stellrings 64 eingreifen, so dass durch Verdrehen des Stellrings 64 die Schieber 72 relativ zum Stellring 64 axial verstellt werden und dabei die Schaltmuffe 42 entsprechend betätigen.

Die Schieber 72 weisen ferner jeweils mittige Zapfen 72b auf, die sich über je einen Umfangsschlitz 64b durch den Stellring 64 hindurch erstrecken und dann in gehäusefeste, achsparallele Nuten 74 von nicht näher dargestellten Führungen oder Gehäusewänden im Gehäuse 18 des Getriebes 14 einragen. Die Schieber 72 bzw. die Zapfen 72b sind somit in den Nuten 74 axial verschiebbar, jedoch in Umfangsrichtung in ihrer Position festgelegt.

Wird über den elektrischen Stellmotor 70 aus der Mittelstellung N heraus der Stellring 64 in der einen oder anderen Umfangsrichtung definiert verdreht, so werden die in die Schaltmuffe 42 einragenden Schieber 72 axial verschoben und dementsprechend die Gangstufen I oder II geschaltet.

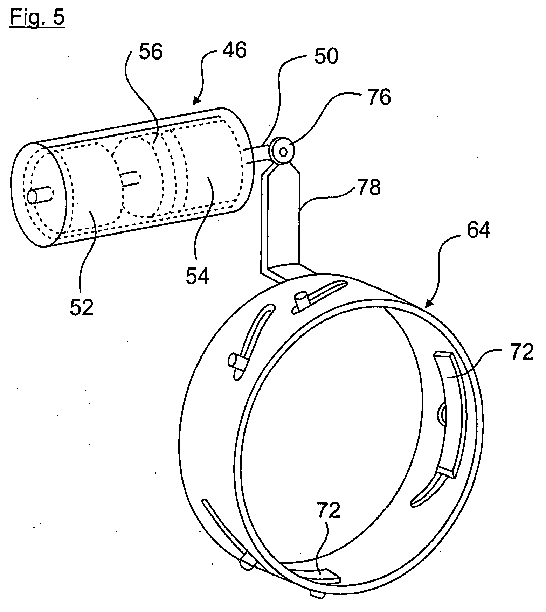

Die Fig. 5 schließlich stellt ein weiteres Beispiel dar, bei dem der Stellring 64 mit den Schiebern 72 analog zur Fig. 4 angeordnet bzw. ausgeführt und deshalb zur Vermeidung von Wiederholungen nicht nochmals beschrieben ist.

Die Verstellung des Stellrings 64 erfolgt jedoch nicht mittels eines Stellmotor 70, sondern mittels eines elektromagnetischen Stellglieds 46 gemäß Fig. 2, wobei der Anker 50 des Stellglieds 46 gelenkig zum Beispiel über ein Bolzengelenk 76 mit einem radial von dem Stellring 64 abragenden Stellarm 78 verbunden ist.

Über das elektromagnetische Stellglied 46 kann der Stellring 64 zum Schalten der Gangstufen I oder II entsprechend verdreht werden.

Abweichend vom den Ausführungsbeispielen kann der Achsantrieb 10 auch auf die Vorderräder des Kraftfahrzeugs abtreiben. Bei einem Hydridantrieb des Kraftfahrzeugs kann die Brennkraftmaschine in üblicher Weise über ein Geschwindigkeits-Wechselgetriebe auf die jeweils andere Antriebsachse abtreiben, wobei die Umschaltung der Gangstufen I oder II gegebenenfalls mit der Getriebesteuerung des Wechselgetriebes kombiniert bzw. elektronisch verknüpft sein kann.

## Patentansprüche

1. Antriebsvorrichtung für Kraftfahrzeuge, insbesondere mit Hybridantrieb, bei dem eine Elektromaschine auf ein Differenzial einer Antriebsachse in Übersetzungsstufen abtreibt, wobei dem Differenzial (16) zumindest zwei, über eine Schaltkupplung (28) umschaltbare, durch Zahnradsätze (22, 24, 26, 28) gebildete Gangstufen (I, II) und eine Entkopplung vorgeschaltet sind, und wobei die Umschaltvorrichtung (42) der Schaltkupplung (28) elektrisch in die Gangstellung (I, II) und in eine Neutralstellung (N) betätigbar ist, **dadurch gekennzeichnet, dass** die Umschaltvorrichtung eine axial verschiebliche Schaltmuffe (42) ist, die direkt über zumindest zwei elektromagnetische Stellvorrichtungen (46) mit zwei in entgegengesetzten Stellrichtungen wirkenden Elektromagneten (52, 54) betätigbar ist, und dass die lineare Bewegung der Stellvorrichtungen (46) über einen Stellring (60) auf die Schaltmuffe (42) übertragbar ist.

2. Antriebsvorrichtung nach Anspruch 1, **dadurch gekennzeichnet, dass** die mit der Schaltmuffe (42) über den Stellring (60) zusammenwirkenden Anker (50) der Stellvorrichtungen (46) durch zumindest eine Feder (58) in die Neutralstellung (N) der Schaltkupplung (28) vorgespannt ist.

3. Antriebsvorrichtung nach Anspruch 1 oder 2, **dadurch gekennzeichnet, dass** der Anker (50) der elektromagnetischen Stellvorrichtung (46) mittels zweier gegensinnig wirkender Schraubendruckfedern (58) in die neutrale Mittelstellung (N) vorgespannt ist.

## Claims

1. Drive unit for motor vehicles, in particular with hybrid drive, in which an electric engine delivers power to a differential on a drive axle in transfer steps, wherein at least two changeable gear levels (I, II) for the differential (16), formed by gear sets (22, 24, 26, 28) and a decoupler are switched to, and wherein the switch over apparatus (42) of the shifting clutch (28) can be activated electrically into the gear position (I, II) and a neutral position (N), **characterised in that** the switch over apparatus is an axially adjusting sliding clutch sleeve (42), which can be activated directly via at least two electromagnetic positioning apparatuses (46) with two electromagnets (52, 54) working in opposite positioning directions to one another, and that the linear movement of the adjustment devices (46) can be transferred via an adjustment ring (60) on the clutch sleeve (42).

2. Drive apparatus according to Claim 1, **characterised in that** the anchor (50) of the adjustment apparatuses (46) working in collaboration with the clutch sleeve (42) via the adjustment ring (60) is pre-tensioned by at least one spring (58) in the neutral setting (N) of the shifting clutch (28).

3. Drive assembly according to Claim 1 or Claim 2, **characterised in that**, the anchor (50) of the electromagnetic adjustment device (46) is pre-tensioned by means of two spiral compression springs (58) working in mutually opposite directions to one another in the neutral middle setting (N).

## Revendications

1. Dispositif d'entraînement pour véhicules automobiles, en particulier à entraînement hybride, dans lequel un moteur électrique agit en sortie dans des niveaux de transmission sur un différentiel d'un axe d'entraînement, dans lequel au moins deux rapports (I, II) formés par des engrenages (22, 24, 26, 28) et pouvant être commutés par un embrayage (28) et un découplage sont montés en amont du différentiel (16), et dans lequel le dispositif de commutation (42) de l'embrayage (28) peut être actionné électriquement en position de rapport (I, II) et en position neutre (N), **caractérisé en ce que** le dispositif de commutation est un manchon de commutation (42) mobile axialement, qui peut être actionné directement au moyen d'au moins deux dispositifs de commande (46) électromagnétiques comprenant deux électroaimants (52, 54) agissant dans des directions de commande opposées, et **en ce que** le mouvement linéaire des dispositifs de commande (46) peut être transféré sur le manchon de commutation (42) par l'intermédiaire d'une bague de commande (60).

2. Dispositif d'entraînement selon la revendication 1, **caractérisé en ce que** l'induit (50) des dispositifs de commande (46) coopérant avec le manchon de commutation (42) par l'intermédiaire de la bague de commande (60) est précontraint par au moins un ressort (58) dans la position neutre (N) de l'embrayage (28).

3. Dispositif d'entraînement selon la revendication 1 ou 2, **caractérisé en ce que** l'induit (50) du dispositif de commande (46) électromagnétique est précontraint dans la position centrale neutre (N) au moyen de deux ressorts hélicoïdaux de compression (58) agissant en sens contraire.
